# FASCICULE DE BREVET EUROPEEN

(11) **EP 2 922 682 B1**
(45) Date de publication et mention de la délivrance du brevet: **09.01.2019**
(21) Numéro de dépôt: 13801662.1
(22) Date de dépôt: 14.11.2013
(51) Int. Cl.: B29C 49/36, B29C 49/48, B29C 49/54, B29C 49/78, B29C 49/06, B29C 49/12, B29C 49/18, B29C 49/30, B29K 67/00, B29L 31/00

(54) **PROCÉDÉ D'ÉTIRAGE SOUFFLAGE D'UN RÉCIPIENT, COMPRENANT UNE MESURE DU DÉPLACEMENT DE LA TIGE D'ÉTIRAGE AU COURS D'UNE OPÉRATION DE BOXAGE**
VERFAHREN ZUM STRECKBLASFORMEN EINES BEHÄLTERS MIT MESSUNG DER BEWEGUNG DER STRECKSTANGE WÄHREND EINES VERSCHACHTELUNGSBETRIEBS
METHOD FOR STRETCH-BLOW MOULDING A CONTAINER, INCLUDING MEASURING THE MOVEMENT OF THE STRETCH ROD DURING A BOXING OPERATION

(30) Priorité: 20.11.2012 FR 1261004
(43) Date de publication de la demande: 30.09.2015
(73) Titulaire: Sidel Participations, 76930 Octeville-sur-Mer (FR)
(72) Inventeur: LETESTU, Mickael, F-76930 Octeville Sur Mer (FR); PROTAIS, Pierrick, F-76930 Octeville sur Mer (FR)
(74) Mandataire: Siloret, Patrick
(86) Numéro de dépôt international: PCT/FR2013/052741
(87) Numéro de publication internationale: WO 2014/080109

(56) Documents cités:
- EP-A1- 2 173 637
- FR-A1- 2 921 293
- GB-A- 2 141 662
- JP-A- 2008 254 244
- US-B1- 6 277 321

## Description

L'invention a trait à la fabrication des récipients par étirage soufflage à partir d'ébauches en matière plastique tel que le polyéthylène téréphtalate (PET).

Qu'il s'agisse d'une préforme ou d'un récipient intermédiaire ayant déjà subi une opération de préformage, une ébauche comprend un corps, généralement cylindrique de révolution, un col, qui constitue le buvant du récipient à former, et un fond qui ferme le corps à l'opposé du col.

La technique classique de fabrication consiste à introduire l'ébauche, préalablement chauffée à une température supérieure à la température de transition vitreuse de la matière (environ 80°C dans le cas du PET), dans un moule muni d'une paroi définissant une cavité à l'empreinte du récipient, et à injecter dans l'ébauche, par le col, un fluide, tel qu'un gaz (généralement de l'air), sous pression pour plaquer la matière contre la paroi du moule.

Sous l'effet de la pression, la matière ramollie par la chauffe forme une bulle qui enfle et se développe à la fois suivant une direction axiale, parallèle à l'axe principal du moule, et suivant une direction radiale, perpendiculaire à l'axe du moule.

Afin d'éviter tout désaxement du récipient et d'assurer une bonne équirépartition de la matière, l'étirage axial de l'ébauche est forcé au moyen d'une tige déplaçable axialement dans le moule, cette tige comprenant une extrémité distale venant repousser le fond de l'ébauche jusqu'à venir le plaquer contre un fond de moule à l'empreinte du fond du récipient.

Certaines applications requièrent l'utilisation de récipients dénommés HR (Heat Résistant), ayant la particularité de pouvoir être remplis à chaud (c'est-à-dire avec un contenu, typiquement un thé ou un jus de fruit pasteurisé, à une température supérieure ou égale à 90°C environ) sans déformation majeure, et en particulier sans ovalisation de la paroi latérale (ou corps) du récipient.

Il est connu de munir le corps du récipient de panneaux déformables destinés à absorber les variations de volume accompagnant la rétraction du volume interne lors du refroidissement. Cette technique est largement utilisée mais ne va pas sans inconvénient. En effet, la flexibilité du corps est considérée comme un défaut de qualité par certains utilisateurs qui préfèrent que le corps du récipient ne se déforme pas lors de la prise en main.

C'est pourquoi il a été proposé de rigidifier le corps tout en munissant le fond du récipient d'une membrane souple susceptible de se déformer tant lors du remplissage (en raison de la pression hydrostatique et de la température du contenu) que lors du refroidissement du contenu (accompagné d'une rétraction de celui-ci). Une telle technique est illustrée par le brevet européen EP 2 173 637 et son équivalent américain US 2010/219152 (SIDEL).

La rigidité de la paroi latérale (ou corps) du récipient est généralement obtenue par voie thermique, consistant à maintenir le corps en contact avec la paroi du moule chauffée à une température prédéterminée (généralement supérieure à 100°C). Cette opération, dénommée thermofixation, conduit à une augmentation de la cristallinité de la matière, qui induit une augmentation de sa rigidité.

Pour la formation du fond, on a généralement recours à la technique dite du « boxage ». Dans cette technique, on a habituellement recours à une unité de moulage équipée d'un fond de moule mobile initialement escamoté et déployé en cours de formage pour venir repousser la matière au niveau du fond, ce qui assure un surétirage de la matière et autorise ainsi la formation de formes complexes, notamment de voûtes profondes. Pour illustrer cette technique, on pourra se reporter à la demande de brevet européen EP 2 349 678 et à son équivalent américain US 2012/0031916 (SIDEL), ou encore au brevet GB 2 141 662.

Cette technique donne satisfaction mais sa mise en oeuvre est cependant délicate. En effet, un compromis doit être trouvé entre la volonté d'étirer la matière au-delà de sa forme finale afin d'accroître la prise d'empreinte du fond, et la nécessité d'éviter que la matière ne fige avant d'avoir acquis sa forme finale. De plus, en raison de la mobilité du fond de moule, il arrive que la matière se trouve pincée entre la paroi du moule et le fond de moule, ce qui conduit à la formation de bavures inesthétiques et consommatrices de matière au détriment du fond.

Les performances finales du récipient reposent par conséquent sur les capacités des techniciens à régler finement les paramètres de la machine, s'agissant en particulier du moment auquel doit être conduit le boxage.

Des généralités sont exprimées à ce sujet dans le brevet américain US 6 277 321 (SCHMALBACH-LUBECA). Ce document demeure cependant peu disert sur les moyens à mettre en oeuvre pour réaliser un boxage correct, alors même que (comme cela est rappelé dans le document EP 2 349 678 précité) le soufflage comporte des incertitudes quant à la manière dont se développe la bulle d'air au sein de l'ébauche, ce qui rend d'autant plus difficile la réalisation d'un boxage correct.

Les objectifs suivants ont animé les inventeurs qui ont souhaité proposer des solutions remédiant aux inconvénients précités :
- améliorer la fiabilité du processus de fabrication des récipients à fond boxé (destinés en particulier aux applications HR) ;
- améliorer la répétabilité d'un tel processus, c'est-à-dire la faculté de ce processus de produire des récipients de qualité constante ;
- maintenir ou augmenter les cadences de production ;
- favoriser l'automatisation du processus de fabrication ;
- in fine, améliorer la qualité des récipients produits.

A cet effet, il est proposé, en premier lieu, un procédé de fabrication, à partir d'une ébauche en matière plastique, d'un récipient ayant un corps et un fond, dans une unité d'étirage soufflage comprenant :
- un moule muni d'une paroi à l'empreinte du corps du récipient, et d'un fond de moule à l'empreinte du fond du récipient, le fond de moule étant déplaçable axialement par rapport à la paroi entre une position basse et une position remontée,
- une tige d'étirage déplaçable axialement par rapport au moule entre une position haute dans laquelle la tige est hors du moule, et une position basse dans laquelle la tige vient plaquer localement l'ébauche contre le fond de moule en position basse de celui-ci ;
ce procédé comprenant :
- une phase d'introduction de l'ébauche dans le moule ;
- une phase d'étirage soufflage, lors de laquelle un fluide sous pression est injecté dans l'ébauche et la tige d'étirage est déplacée de sa position haute à sa position basse ;
- une phase de boxage lors de laquelle le fond de moule, initialement en position basse, est déplacé vers sa position remontée, et lors de laquelle la tige d'étirage, accompagnant le fond de moule, est déplacée depuis sa position basse jusqu'à une position remontée correspondant à la position remontée du fond de moule ;
ce procédé comprenant en outre la détermination du départ du fond de moule de sa position basse par détection du mouvement de la tige à partir de sa position basse, et la détermination de l'arrivée du fond de moule à sa position remontée par détection de l'arrêt de la tige à sa position remontée.

La connaissance du début réel et de la fin réelle de la phase de boxage permet de faciliter le réglage de la machine à l'aide d'informations fiables et objectives.

Effectuer les mesures sur la tige évite de devoir instrumenter le fond de moule, dont l'environnement est peu propice à une telle instrumentation (présence de vibrations, espace compté).

Diverses caractéristiques supplémentaires peuvent être prévues, seules ou en combinaison :
- il est prévu la détermination de la position instantanée du fond de moule entre sa position basse et sa position remontée par détection de la position instantanée de la tige entre la position basse et la position remontée de celle-ci ;
- il est prévu une opération de calage d'une commande de déplacement du fond de moule, lorsque le départ du fond de moule ne correspond pas à un départ théorique prédéterminé ;
- il est prévu une opération de calage du débit d'une électrovanne reliant un vérin portant le fond de moule à une source de fluide sous pression, lorsque l'arrivée réelle du fond de moule ne correspond pas à une arrivée théorique prédéterminée.

Il est proposé, en deuxième lieu, une unité d'étirage soufflage pour la fabrication, à partir d'une ébauche en matière plastique, d'un récipient ayant un corps et un fond, cette unité d'étirage soufflage comprenant :
- un moule muni d'une paroi à l'empreinte du corps du récipient, et d'un fond de moule à l'empreinte du fond du récipient, le fond de moule étant déplaçable axialement par rapport à la paroi entre une position basse et une position remontée ;
- une tige d'étirage déplaçable axialement par rapport au moule entre une position haute dans laquelle la tige est hors du moule, et une position basse dans laquelle la tige vient plaquer localement l'ébauche contre le fond de moule en position basse de celui-ci ;
- des moyens de détection au moins du mouvement de la tige à partir de sa position basse, et de l'arrêt de la tige à une position remontée correspondant à la position remontée du fond de moule, et
- une unité centrale de contrôle agencée pour en déduire le départ du fond de moule de sa position basse, et l'arrivée du fond de moule à sa position remontée.

Diverses caractéristiques supplémentaires peuvent être prévues, seules ou en combinaison :
- les moyens de détection se présentent sous la forme d'un capteur optique, tel qu'un capteur laser ;
- l'unité d'étirage soufflage comprenant un bâti, et la tige d'étirage étant montée sur un chariot mobile par rapport au bâti, le capteur est fixé sur le bâti et pointe vers le chariot.

D'autres objets et avantages de l'invention apparaîtront à la lumière de la description faite ci-après en référence aux dessins annexés dans lesquels :
- la figure 1 est une vue schématique illustrant une machine de formage de récipients par étirage soufflage, comprenant un carrousel tournant et une série d'unités de formage montées sur le carrousel ;
- la figure 2 est une vue de côté montrant une unité de formage, représentée avec la tige d'étirage en position haute et le fond de moule en position basse, après introduction d'une préforme dans le moule ;
- la figure 3 est une vue de côté montrant, à échelle agrandie, l'unité de formage de la figure 2, au cours du formage du récipient, en position basse du fond de moule ;
- la figure 4 est une vue similaire à la figure 3, où la tige d'étirage et le fond de moule sont tous deux en position remontée ;
- la figure 5 est un diagramme sur lequel sont tracés de manière superposée la courbe de pression régnant dans l'ébauche au cours du formage et la position du fond de moule ;

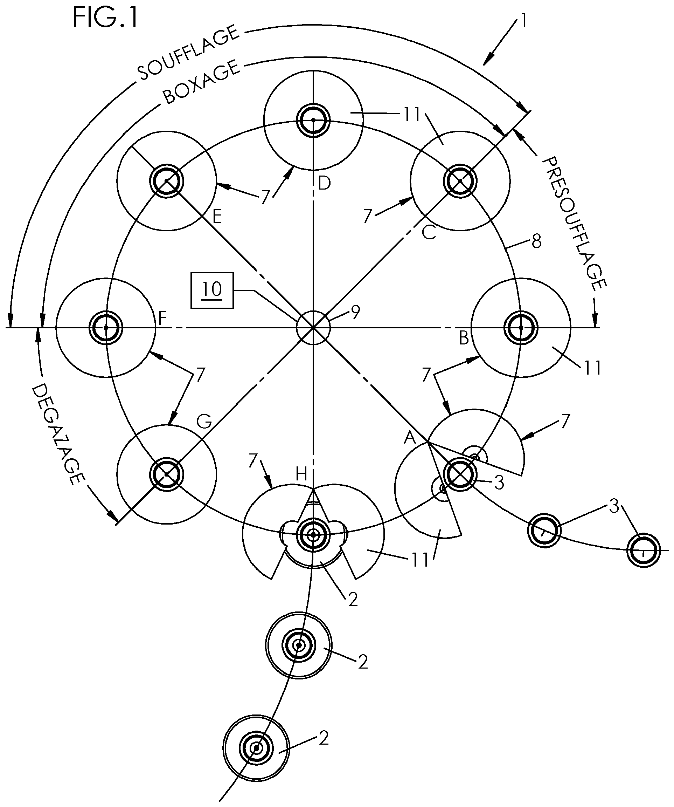

Sur la figure 1 est partiellement représenté une machine **1** de formage de récipients **2** par étirage soufflage à partir d'ébauches **3** en matière plastique (tel que le PET).

Bien qu'une ébauche **3** puisse être un récipient intermédiaire issu d'une première opération de formage, dans ce qui suit on considère que l'ébauche 3 est une préforme brute d'injection.

Le récipient **2** à former comprend une paroi **4** latérale ou corps, un col **5** déjà formé sur la préforme **3**, et un fond **6** qui s'étend dans le prolongement du corps **4** à l'opposé du col **5**.

La machine **1** est équipée d'au moins une unité **7** d'étirage soufflage (et en l'espèce d'une série d'unités **7** d'étirage soufflage), encore appelée poste de formage. Selon un mode de réalisation, illustré sur la figure 1, la machine **1** comprend une roue **8** (également appelée carrousel) entraînée en rotation autour d'un axe central et sur laquelle sont montés les postes **7** de formage, ainsi qu'un capteur **9** de la position angulaire instantanée de la roue **8**, sous forme par exemple d'un codeur (c'est-à-dire, en pratique, un roulement instrumenté).

La machine **1** comprend un système de commande qui pilote de manière automatique son fonctionnement, sous forme d'une unité **10** centrale de contrôle informatisée, et des contrôleurs (par exemple de type API - Automate programmable industriel) équipés d'actionneurs pilotant individuellement chaque poste **7** de formage.

Chaque poste **7** de formage est équipé d'un moule **11** à l'empreinte du récipient **2**, et d'un dispositif **12** d'étirage.

Le moule **11** est par exemple du type portefeuille et comprend deux demi-moules articulés autour d'une charnière commune et qui s'ouvrent pour permettre, successivement, l'évacuation d'un récipient **2** formé et l'introduction d'une préforme **3** préalablement chauffée dans une unité de chauffe (non représentée).

Le moule **11** comprend une paroi **13** définissant une cavité à l'empreinte du corps **4** du récipient, s'étendant suivant un axe X principal, et un fond **14** de moule muni d'une surface **15** supérieure à l'empreinte du fond **6** du récipient **2**.

Chaque poste **7** de formage est équipé d'une tuyère (non représentée) par laquelle un fluide (notamment un gaz tel que de l'air) est injecté dans le moule **11**. Chaque poste **7** de formage est également équipé d'un dispositif d'injection comprenant un bloc d'actionneurs relié à la tuyère pour commander l'injection du fluide.

Plus précisément, le bloc d'actionneurs comprend une ou plusieurs électrovannes agencées pour mettre en communication la tuyère avec, respectivement, une source de fluide à une pression de présoufflage (à une valeur généralement comprise entre 5 et 10 bars), une source de fluide à une pression de soufflage (à une valeur généralement comprise entre 15 et 40 bars), et l'air libre. Ce bloc d'actionneurs est piloté par l'unité **10** centrale de contrôle.

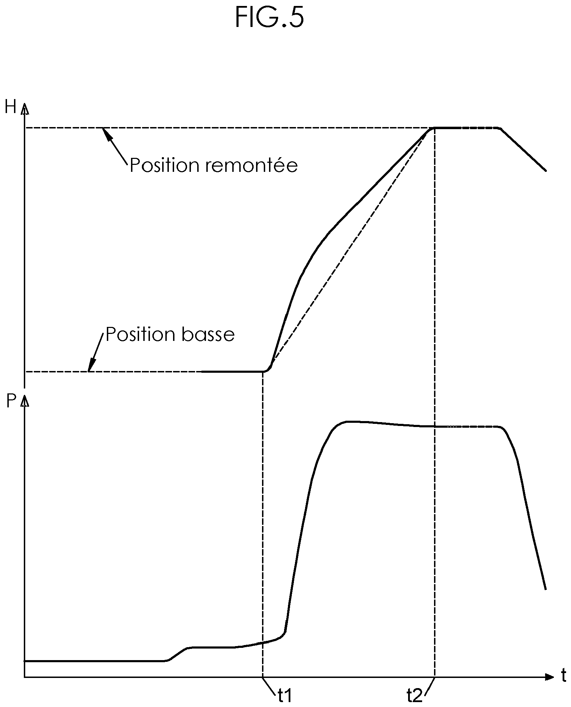

En outre, chaque poste **7** de formage est muni d'un dispositif de mesure de la pression régnant dans le récipient en cours de formage, relié à l'unité **10** centrale de contrôle. Ce dispositif de mesure comprend par exemple un capteur de pression monté au niveau de la tuyère, dans laquelle la pression en cours de formage est identique à la pression régnant dans le récipient **2**. L'unité **10** centrale de contrôle peut être programmée pour établir une courbe des variations de la pression (notée P) de fluide régnant dans la préforme **3** au cours du formage, comme illustré sur la figure 5.

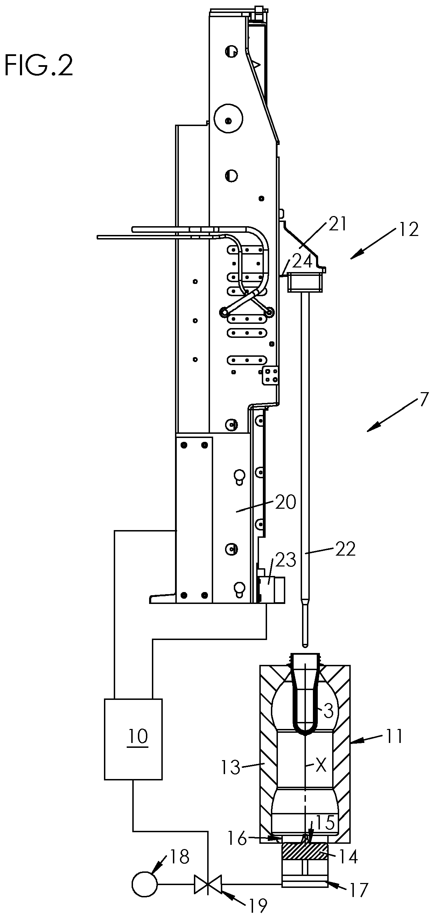

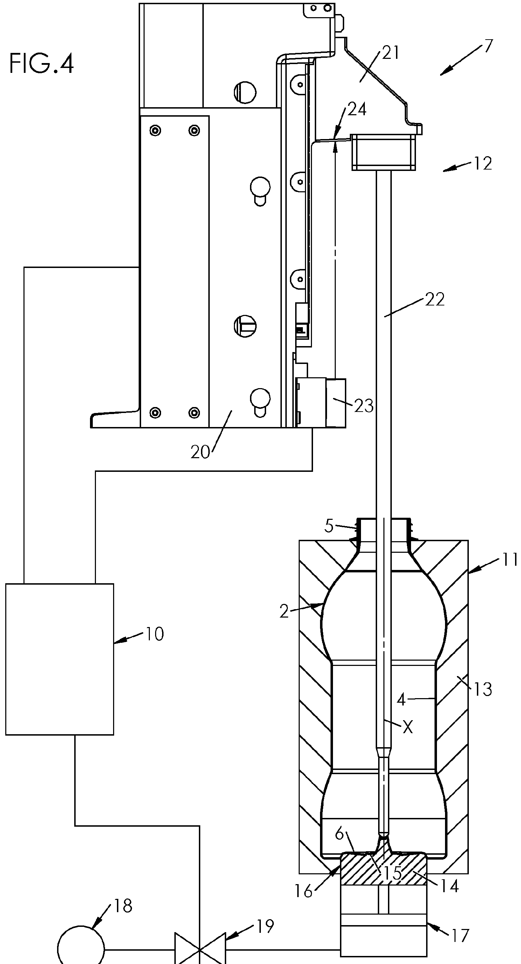

La paroi **13** présente, dans une partie inférieure, une ouverture **16** définissant un passage pour le fond **14** de moule, lequel est monté déplaçable axialement par rapport à la paroi **13** entre :
- une position basse (figure 2), dans laquelle le fond **14** de moule est écarté de l'ouverture **16**, et
- une position remontée (figure 4), dans laquelle le fond **14** de moule obture l'ouverture **16**, et dans laquelle la surface **15** supérieure complète ainsi l'empreinte du récipient **2**.

La mobilité du fond **14** de moule permet de procéder à un surétirage du fond **6** du récipient, au cours d'une opération de boxage qui sera décrite ci-après. Le déplacement du fond **14** de moule est par exemple assuré par un vérin **17** sur lequel est monté le fond **14** de moule, ce vérin **17** étant relié à une source **18** de fluide (par exemple la source de fluide à la pression de soufflage) par l'intermédiaire d'une électrovanne **19** pilotée par l'unité **10** centrale de contrôle.

Le dispositif **12** d'étirage comprend un bâti **20**, fixé sur la roue **8** de la machine **1** et qui s'étend verticalement sensiblement à l'aplomb du moule **11**.

Le dispositif **12** d'étirage comprend un équipage mobile incluant un chariot **21** coulissant sur un rail solidaire du bâti **20**, ainsi qu'une tige **22** d'étirage fixée sur le chariot **21** par une extrémité supérieure.

Le dispositif d'étirage est par exemple du type magnétique, et comprend à cet effet :
- une paire d'électroaimants ou moteurs solidaires du bâti **20** et pilotés par l'unité **10** centrale de contrôle ;
- une paire de pistes magnétiques solidaires du chariot **21**, et formées chacune d'une série d'aimants permanents à polarité alternée, placées en regard et à faible distance de chacun des moteurs.

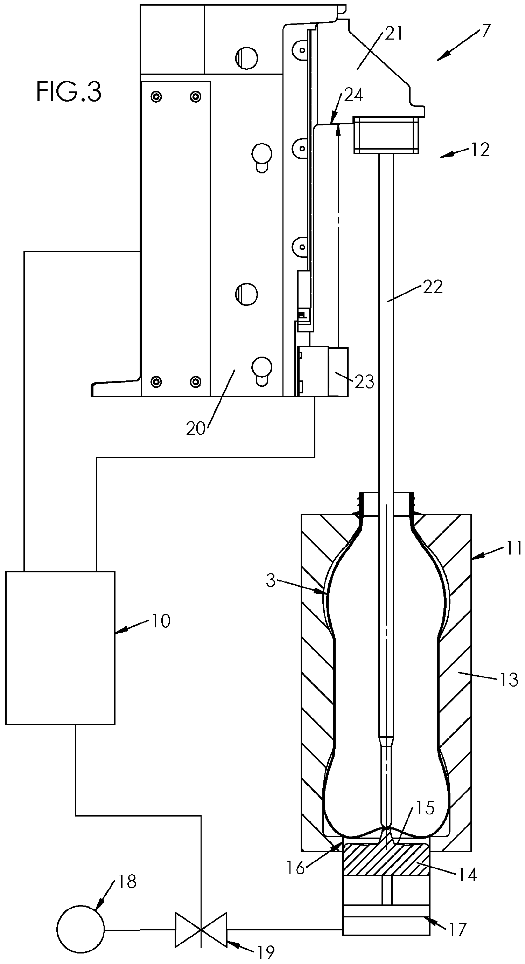

Par l'intermédiaire du chariot **21**, la tige **22** est ainsi montée mobile par rapport au bâti **20**, entre :
- une position haute (figure 2) dans laquelle la tige **22** est complètement sortie du moule **11**, une extrémité inférieure (libre) de la tige **22** se trouvant à une distance du moule **11** suffisante pour permettre l'évacuation d'un récipient **2** formé et l'introduction d'une préforme **3** à former ;
- une position basse (figure 3), dans laquelle la tige **22** d'étirage est reçue dans le moule **11** en venant au voisinage immédiat du fond **14** de moule (lequel se trouve dans ce cas en position basse), la matière du récipient **2** en formation étant localement prise en sandwich entre la tige **22** et le fond **14** de moule.

Dans cette position, une carotte d'injection, présente en saillie à une extrémité inférieure de la préforme, vient se loger dans une réserve en creux ménagée à cet effet au centre de la surface **15** supérieure du fond **14** de moule. Le maintien de la carotte dans la réserve garantit une bonne répartition de la matière pendant le déplacement du fond **14** de moule depuis sa position basse jusqu'à sa position remontée. C'est pourquoi la tige **22** et le fond **14** de moule sont maintenus solidaires pendant le déplacement du fond **14** de moule.

Sur la machine, la position basse de la tige **22** d'étirage peut être préréglée de manière qu'un interstice soit ménagé entre l'extrémité libre de la tige **22** en position basse et la surface **15** supérieure du fond **14** de moule en position basse. La valeur de cet interstice, prédéterminée, est inférieure ou égale à l'épaisseur locale de matière au centre du fond **6** du récipient **2**. En pratique l'interstice est de préférence compris entre 0,2 et 1 mm (et par exemple de 0,5 mm environ).

La fabrication d'un récipient **2** est réalisée sous le contrôle de l'unité **10** centrale.

Dans l'exemple illustré, où la trajectoire des postes **7** de formage est circulaire et où, en régime stationnaire de la machine **1**, la vitesse angulaire de la roue **8** est sensiblement constante, la position angulaire relative de chaque poste **7** de formage (déduite par l'unité **10** centrale de contrôle à partir des données angulaires fournies par le capteur **9** de la roue **8**) et le temps relatif (propre à chaque poste **7** de formage) peuvent être considérés équivalents.

On affecte arbitrairement l'origine angulaire (respectivement temporelle) au début du cycle, matérialisé par le point - noté A sur la figure 1 - (respectivement l'instant) où la préforme **3** est introduite dans le moule **11**. La fin du cycle est matérialisée par le point - noté H sur la figure 1 - (respectivement l'instant) où le récipient **2** formé est éjecté du moule **11**.

L'opération de départ consiste à introduire dans le moule **11** (point A) la préforme **3**, préalablement chauffée à une température supérieure à la température de transition vitreuse de la matière de la matière (environ 80°C dans le cas du PET). Une fois la préforme **3** en position et le moule **11** refermé, l'unité **10** centrale de contrôle provoque le déverrouillage puis le déplacement du chariot **21** (et donc de la tige **22** d'étirage) depuis la position haute vers la position base, dans laquelle l'extrémité libre de la tige **22** vient au contact du fond de la préforme **3**.

Suit une phase, dite de présoufflage (entre les points B et C sur la figure 1), qui consiste à injecter dans la préforme **3** le fluide à la pression de présoufflage, tout en déplaçant la tige **22** d'étirage depuis sa position haute vers sa position basse tandis que le fond **14** de moule est maintenu dans sa position basse.

A la fin de cette phase de présoufflage :
- le récipient **2** n'est pas complètement formé, plusieurs zones du récipient **2** n'étant toujours pas au contact de la paroi **13** du moule **11** en raison de l'insuffisance de la pression ;
- la tige **22** d'étirage, dans sa position basse, vient plaquer localement le fond de la préforme **3** en cours de formage contre la surface **15** supérieure du fond **14** de moule. En d'autres termes, le fond de la préforme **3** est pris en sandwich entre l'extrémité libre de la tige **22** d'étirage et la surface **15** supérieure du fond **14** de moule.

A l'issue de la phase de présoufflage (en pratique dès lors que la tige **22** a atteint sa position basse) est commandée une phase de soufflage du récipient **2**, consistant à injecter dans le récipient **2** en formation le fluide à la pression de soufflage. Comme on le voit sur la courbe inférieure de la figure 5, la pression subit une augmentation brusque, depuis la pression de présoufflage, jusqu'à atteindre la pression de soufflage. La phase de soufflage inclut une étape de stabilisation, consistant à maintenir pendant une durée prédéterminée (correspondant en pratique à un angle prédéterminé, en l'espèce entre les points D et F sur la figure 1) la pression de soufflage dans le récipient **2** afin de correctement plaquer la matière contre la paroi **13** du moule **11** (et ainsi favoriser la prise d'empreinte du récipient **2** tout en assurant une thermofixation de la matière).

Pendant la phase de soufflage (et éventuellement à cheval sur la phase de présoufflage) est commandée (par l'unité **10** centrale de contrôle) une opération de boxage du fond **6** du récipient **2** en cours de formation, qui consiste à déplacer le fond **14** de moule de sa position basse jusqu'à sa position remontée en actionnant le vérin **17**.

Afin de permettre la remontée du fond **14** de moule, la tige **22** d'étirage est de préférence débrayée dès qu'est commandé le déplacement du fond **14** de moule. La tige **22** accompagne de la sorte le fond **14** de moule pendant la durée du boxage.

Après la phase de soufflage est commandée une phase finale de dégazage (entre les points F et G), consistant à couper l'alimentation en fluide sous pression de soufflage tout en maintenant la mise à l'air libre. Il en résulte une dépressurisation complète du récipient **2**, dont la pression interne diminue jusqu'à la pression atmosphérique.

Le récipient **2** ainsi formé est alors évacué du moule **11** (point H).

La qualité du fond **6** du récipient **2** dépend en grande partie du boxage. Un boxage initié (ou finalisé) trop tôt peut s'avérer inutile, la matière étant insuffisamment étirée. Il en résulte alors une mauvaise prise d'empreinte et/ou une rigidité insuffisante. Initié (ou finalisé) trop tard, le boxage peut conduire à un pincement de la matière entre la paroi **13** et le fond **14** de moule, et l'apparition de bourrelets inesthétiques et consommateurs de matière, voire une découpe locale de la matière. On comprend donc qu'il soit nécessaire de correctement caler, par rapport à l'ensemble des autres opérations de formage, au moins le début et la fin du boxage.

Compte tenu des temps de réponse des électrovannes, qui peuvent être estimées grâce aux données constructeurs mais sans que ces données soit garanties, il n'est pas suffisant de se baser sur les instants de commande d'ouverture et de fermeture de l'électrovanne **19** de commande du vérin **17** portant le fond **14** de moule. En outre, la position remontée du fond **14** de moule correspondant à une butée de fin de course, l'instant (ou la position angulaire) auquel le fond **14** de moule parvient en position remontée ne peut être déduit d'aucun paramètre machine.

C'est pourquoi l'on souhaite déterminer au moins le départ réel du fond **14** de moule de sa position basse, et l'arrivée réelle du fond **14** de moule à sa position remontée. En théorie, le boxage est initié en même temps que (ou de préférence de manière légèrement anticipée sur) la phase de soufflage (au point C), et terminé pendant l'étape de stabilisation (entre les points D et F).

Par « déterminer » une occurrence, on entend situer cette occurrence au cours du formage, soit en fonction du temps, soit en fonction de la position du poste **7** de formage sur sa trajectoire.

Il est théoriquement possible d'instrumenter directement le fond **14** de moule pour obtenir les données permettant d'en déduire au moins le départ du fond **14** de moule de sa position basse et l'arrivée du fond **14** de moule à sa position remontée. Cependant, dans de nombreuses configurations machine, l'environnement du fond **14** de moule est peu propice à une telle instrumentation, en raison notamment des vibrations dont sont affectés le fond **14** de moule et son vérin **17**, des conditions thermiques défavorables (température élevée ou fluctuante), et de l'humidité éventuelle résultant de fuites de fluide (même minimes) aux raccords entre le moule **11** et des circuits d'alimentation en fluide caloporteur destiné à chauffer la paroi **13** et/ou le fond **14** de moule.

C'est pourquoi il est prévu, conformément à l'invention, d'instrumenter la tige **22** d'étirage, qui demeure couplée au fond **14** de moule pendant la remontée de celui-ci, et d'obtenir les données précitées concernant le fond **14** de moule par l'intermédiaire de la tige **22** d'étirage.

Ainsi :
- le départ du fond **14** de moule de sa position basse est déterminé par détection du mouvement de la tige **22** à partir de sa position basse, qui correspond (à l'épaisseur de matière près) à la position basse du fond **14** de moule ;
- l'arrivée du fond **14** de moule à sa position remontée est déterminée par détection de l'arrêt de la tige **22** à une position remontée correspondant (à l'épaisseur de matière près) à la position remontée du fond **14** de moule.

En pratique, dès qu'est détecté le mouvement de la tige **22** à partir de sa position basse, l'unité **10** de contrôle mémorise l'instant, noté t1 sur la figure 5, (ou la position angulaire du poste **7** de formage concerné) auquel est détecté ce mouvement. Sur la figure 5, H représente, en ordonnée de la courbe supérieure, la position du fond **14** de moule.

De même, dès qu'est détecté l'arrêt de la tige **22** à sa position remontée, l'unité **10** de contrôle mémorise l'instant, noté t2 sur la figure 5, (ou la position angulaire du poste **7** de formage concerné) auquel est détecté cet arrêt.

Suivant un mode particulier de réalisation, ces deux instants (respectivement ces deux positions angulaires) sont considérés suffisants pour permettre, par rétroaction et reprogrammation de l'unité **10** centrale de contrôle, un calage de la commande d'ouverture de l'électrovanne **19** du vérin **17** (dont dépend le départ réel du fond **14** de moule), ou du débit de l'électrovanne **19** (dont dépend la vitesse de déplacement du fond **14** de moule, et donc l'arrivée réelle du fond **14** de moule à sa position remontée).

Un tel calage peut être effectué lorsque le départ réel du fond **14** de moule de sa position basse (respectivement l'arrivée réelle du fond **14** de moule à sa position remontée) ne correspond pas à un départ théorique prédéterminé (respectivement une arrivée théorique prédéterminée), pour lequel il est décrété que le boxage est réalisé de manière satisfaisante.

Il est envisageable de se contenter de ces valeurs (instant ou position angulaire) de début réel et de fin réelle du boxage en négligeant le comportement de la matière pendant le boxage dès lors que son début et sa fin sont décrétés correctement situés pendant le formage.

En variante, il est envisageable de se servir de ces valeurs pour reconstruire une courbe de déplacement du fond **14** de moule, supposé linéaire en fonction du temps. Cette courbe est représentée par la ligne pointillée entre les instants t1 et t2 sur la figure 5.

Suivant un autre mode de réalisation, la position du fond **14** de moule entre sa position basse et sa position haute est déterminée de manière systématique et répétée (de manière instantanée si l'on raisonne sur une base temporelle, et par unité d'angle si l'on raisonne sur une base angulaire). Cette position est déduite d'une mesure systématique et répétée de la position de la tige **22** entre sa position basse et sa position remontée. L'on peut alors en déduire la courbe réelle des déplacements du fond **14** de moule entre le départ de sa position basse (instant t1) et l'arrivée à sa position remontée (instant t2).

Cette courbe n'est pas nécessairement linéaire, en raison des variations de pression à l'intérieur du récipient **2** en cours de formation. Il en est ainsi notamment lorsque le boxage est initié au début de la phase de soufflage (ou légèrement avant celle-ci). Dans ce cas, l'augmentation brusque de pression dans le récipient **2** induit une résistance croissante à la remontée du fond de **14** moule. En l'absence de modification du débit de l'électrovanne **19** d'alimentation du vérin **17**, se produit alors une diminution de la vitesse de déplacement du fond **14** de moule au fur et à mesure de son déplacement (comme illustré par la ligne en trait plein entre les instants t1 et t2 sur la courbe supérieure de la figure 5), et par conséquent un retard de l'arrivée du fond **14** de moule à sa position remontée.

En disposant de données instantanées de position du fond **14** de moule (via la mesure de la position instantanée de la tige **22**), il est possible, par rétroaction d'un cycle de formage au cycle suivant, de faire varier le débit de l'électrovanne **19** pour adapter la vitesse de déplacement du fond **14** de moule (par exemple suivant un modèle linéaire) et ainsi de caler l'instant (ou le point) d'arrivée du fond **14** de moule à sa position remontée.

Concrètement, l'instrumentation de la tige **22** peut être du type capacitif, et comprendre par exemple un détecteur de présence en position basse de la tige **22**, et un détecteur de présence en position haute de la tige **22**.

Toutefois, suivant un mode préféré de réalisation, l'instrumentation de la tige est du type optique.

Dans ce cas, l'instrumentation comprend un capteur **23** optique de mesure de distance, par exemple du type télémètre laser. Ce type de capteur est notamment commercialisé par la société Micro Epsilon sous la dénomination commerciale Opto NCDT. Le capteur **23** est relié à l'unité **10** centrale de contrôle à laquelle il communique ses mesures.

Le capteur **23** est solidaire du bâti **20** et pointe sur une face **24** inférieure du chariot **21** portant la tige **22** d'étirage, de sorte à détecter tout mouvement (ou à mesurer la position) du chariot **21**, et donc de la tige **22** d'étirage.

Le capteur **23** détecte au moins le déplacement de la tige **22** de sa position basse, et l'arrêt de celle-ci à sa position haute. Il peut également détecter de manière instantanée (c'est-à-dire en continu) les positions de la tige **22** entre sa position basse et sa position haute.

Des mesures issues du capteur **23**, l'unité **10** centrale de contrôle déduit au moins le départ réel du fond **14** de moule de sa position basse, et son arrivée réelle à sa position remontée. En variante, et selon le type de capteur, l'unité **10** centrale de contrôle peut déterminer la position instantanée réelle du fond **14** de moule entre sa position basse et sa position haute, c'est-à-dire pendant toute la durée du boxage.

Sur la base de ces mesures, l'unité **10** centrale de contrôle peut effectuer par rétroaction une modification des paramètres machine (notamment l'instant ou l'angle de commande de l'électrovanne **19**, et éventuellement le débit de celle-ci).

Il résulte de l'architecture et du procédé présentés ci-dessus un certain nombre d'avantages.

Premièrement, la détermination du début réel (correspondant au départ réel du fond **14** de moule de sa position basse) et de la fin réelle (correspondant à l'arrivée réelle du fond de moule à sa position remontée) du boxage facilitent l'automatisation de la machine **1** en permettant, par rétroaction, un calage automatique au moins de la commande d'ouverture de l'électrovanne **19**.

Deuxièmement, ce calage pouvant être conduit de manière systématique, il en résulte une amélioration de la fiabilité et de la répétabilité du processus de fabrication des récipients à fond boxé.

Troisièmement, en limitant les arrêts machine nécessaires à une reprogrammation manuelle, on augmente les cadences de production.

Quatrièmement, l'optimisation du processus de formage permet d'améliorer la qualité des récipients produits.

## Revendications

1. Procédé de fabrication, à partir d'une ébauche (**3**) en matière plastique, d'un récipient (**2**) ayant un corps (**4**) et un fond (**6**), dans une unité (**7**) d'étirage soufflage comprenant :
- un moule (**11**) muni d'une paroi (**13**) à l'empreinte du corps (**4**) du récipient (**2**), et d'un fond (**14**) de moule à l'empreinte du fond (**6**) du récipient (**2**), le fond (**14**) de moule étant déplaçable axialement par rapport à la paroi (**13**) entre une position basse et une position remontée ;
- une tige (**22**) d'étirage déplaçable axialement par rapport au moule (**11**) entre une position haute dans laquelle la tige (**22**) est hors du moule, et une position basse dans laquelle la tige (**22**) vient plaquer localement l'ébauche (**3**) contre le fond (**14**) de moule en position basse de celui-ci ;
ce procédé comprenant :
- une phase d'introduction de l'ébauche (**3**) dans le moule (**11**) ;
- une phase d'étirage soufflage, lors de laquelle un fluide sous pression est injecté dans l'ébauche (**3**) et la tige (**22**) d'étirage est déplacée de sa position haute à sa position basse ;
- une phase de boxage lors de laquelle le fond (**14**) de moule, initialement en position basse, est déplacé vers sa position remontée, et lors de laquelle la tige (**22**) d'étirage, accompagnant le fond (**14**) de moule, est déplacée depuis sa position basse jusqu'à une position remontée correspondant à la position remontée du fond (**14**) de moule ;
ce procédé étant **caractérisé en ce qu'**il comprend la détermination du départ du fond (**14**) de moule de sa position basse par détection du mouvement de la tige (**22**) à partir de sa position basse, et la détermination de l'arrivée du fond (**14**) de moule à sa position remontée par détection de l'arrêt de la tige (**22**) à sa position remontée.

2. Procédé selon la revendication 1, **caractérisé en ce qu'**il comprend la détermination de la position instantanée du fond (**14**) de moule entre sa position basse et sa position remontée par détection de la position instantanée de la tige (**22**) entre la position basse et la position remontée de celle-ci.

3. Procédé selon la revendication 1 ou la revendication 2, **caractérisé en ce qu'**il comprend une opération de calage d'une commande de déplacement du fond (**14**) de moule, lorsque le départ du fond (**14**) de moule ne correspond pas à un départ théorique prédéterminé.

4. Procédé selon l'une des revendications précédentes, **caractérisée en ce qu'**il comprend une opération de calage du débit d'une électrovanne (**19**) reliant un vérin (**17**) portant le fond (**14**) de moule à une source (**18**) de fluide sous pression, lorsque l'arrivée réelle du fond (**14**) de moule ne correspond pas à une arrivée théorique prédéterminée.

5. Unité (**7**) d'étirage soufflage pour la fabrication, à partir d'une ébauche (**3**) en matière plastique, d'un récipient (**2**) ayant un corps (**4**) et un fond (**6**), cette unité (**7**) d'étirage soufflage comprenant :
- un moule (**11**) muni d'une paroi (**13**) à l'empreinte du corps (**4**) du récipient (**2**), et d'un fond (**14**) de moule à l'empreinte du fond (**6**) du récipient (**2**), le fond (**14**) de moule étant déplaçable axialement par rapport à la paroi (**13**) entre une position basse et une position remontée ;
- une tige (**22**) d'étirage déplaçable axialement par rapport au moule (**11**) entre une position haute dans laquelle la tige (**22**) est hors du moule, et une position basse dans laquelle la tige (**2**) vient plaquer localement l'ébauche (**3**) contre le fond (**14**) de moule en position basse de celui-ci ;
cette unité (**7**) d'étirage soufflage étant **caractérisée en ce qu'**elle est équipée de moyens (**23**) de détection au moins du mouvement de la tige (**22**) à partir de sa position basse, et de l'arrêt de la tige (**22**) à une position remontée correspondant à la position remontée du fond (**14**) de moule, et d'une unité (**10**) centrale de contrôle agencée pour en déduire le départ du fond (**14**) de moule de sa position basse, et l'arrivée du fond (**14**) de moule à sa position remontée.

6. Unité (**7**) d'étirage soufflage selon la revendication 5, **caractérisée en ce que** les moyens de détection se présentent sous la forme d'un capteur (**23**) optique.

7. Unité (**7**) d'étirage soufflage selon la revendication 6, **caractérisée en ce que** le capteur (**23**) optique est un capteur laser.

8. Unité (7) d'étirage soufflage selon la revendication 6 ou la revendication 7, **caractérisée en ce qu'**elle comprend un bâti (20), **en ce que** la tige (22) d'étirage est montée sur un chariot (21) mobile par rapport au bâti (20), et **en ce que** le capteur (23) est fixé sur le bâti (20) et pointe vers le chariot (21).

## Patentansprüche

1. Verfahren zur Herstellung eines Behälters (2), der einen Körper (4) und einen Boden (6) aufweist, aus einem Rohling (3) aus Kunststoff in einer Streckblasformeinheit (7), umfassend:
- eine Form (11), die mit einer Wand (13) mit dem Abdruck des Körpers (4) des Behälters (2) und einem Boden (14) der Form mit dem Abdruck des Bodens (6) des Behälters (2) versehen ist, wobei der Boden (14) der Form in Bezug auf die Wand (13) zwischen einer unteren Position und einer angehobenen Position axial bewegbar ist,
- eine Streckstange (22), die axial in Bezug auf die Form (11) zwischen einer oberen Position, in der sich die Stange (22) außerhalb der Form befindet, und einer unteren Position bewegbar ist, in der die Stange (22) den Rohling (3) lokal gegen den Boden (14) der Form in seiner unteren Position drückt,
wobei das Verfahren aufweist:
- eine Phase des Einführens des Rohlings (3) in die Form (11),
- eine Phase des Streckblasens, bei der eine Flüssigkeit unter Druck in die Form (3) eingespritzt wird und die Streckstange (22) von ihrer oberen Position in ihre untere Position bewegt wird,
- eine Verschachtelungsphase, während der der Boden (14) der Form, der sich anfänglich in der unteren Position befindet, in Richtung seiner angehobenen Position bewegt wird, und bei der die Streckstange (22), die den Boden (14) der Form begleitet, von ihrer unteren Position bis in eine angehobene Position bewegt wird, die der angehobenen Position des Bodens (14) der Form entspricht,
wobei dieses Verfahren **dadurch gekennzeichnet ist, dass** es das Bestimmen des Abgehens des Bodens (14) der Form von seiner unteren Position durch Erfassen der Bewegung der Stange (22) ab ihrer unteren Position und das Bestimmen des Ankommens des Bodens (14) der Form in seiner angehobenen Form durch Erfassen des Anhaltens der Stange (22) in ihrer angehobenen Position aufweist.

2. Verfahren nach Anspruch 1, **dadurch gekennzeichnet, dass** es das Bestimmen der aktuellen Position des Bodens (14) der Form zwischen seiner unteren Position und seiner angehobenen Position durch Erfassen der aktuellen Position der Stange (22) zwischen der unteren Position und der angehobenen Position von dieser aufweist.

3. Verfahren nach Anspruch 1 oder 2, **dadurch gekennzeichnet, dass** es einen Einstellvorgang einer Steuerung der Bewegung des Bodens (14) der Form aufweist, wenn das Abgehen des Bodens (14) der Form einem vorbestimmten theoretischen Abgehen nicht entspricht.

4. Verfahren nach einem der vorhergehenden Ansprüche, **dadurch gekennzeichnet, dass** es einen Einstellvorgang der Durchflussmenge eines Magnetventils (19) aufweist, das einen Zylinder (17), der den Boden (14) der Form trägt, mit einer Quelle (18) der Flüssigkeit unter Druck verbindet, wenn das tatsächliche Ankommen des Bodens (14) der Form einem vorbestimmten theoretischen Ankommen nicht entspricht.

5. Streckblasformeinheit (7) zur Herstellung aus einem Rohling (3) aus Kunststoff eines Behälters (2), der einen Körper (4) und einen Boden (6) aufweist, wobei diese Streckblasformeinheit (7) aufweist:
- eine Form (11), die mit einer Wand (13) mit dem Abdruck des Körpers (4) des Behälters (2) und einem Boden (14) der Form mit dem Abdruck des Bodens (6) des Behälters (2) versehen ist, wobei der Boden (14) der Form in Bezug auf die Wand (13) zwischen einer unteren Position und einer angehobenen Position axial bewegbar ist,
- eine Streckstange (22), die axial in Bezug auf die Form (11) zwischen einer oberen Position, in der sich die Stange (22) außerhalb der Form befindet, und einer unteren Position bewegbar ist, in der die Stange (2) den Rohling (3) lokal gegen den Boden (14) der Form in seiner unteren Position drückt,
wobei diese Streckblasformeinheit (7) **dadurch gekennzeichnet ist, dass** sie mit Mitteln (23) zum Erfassen von mindestens der Bewegung der Stange (22) ausgehend von ihrer unteren Position und des Ankommens der Stange (22) in einer angehobenen Position, die der angehobenen Position des Bodens (14) der Form entspricht, und einer zentralen Steuereinheit (10) ausgestattet ist, die ausgebildet ist, um daraus das Abgehen des Bodens (14) der Form von seiner unteren Position und das Ankommen des Bodens (14) der Form in seiner angehobenen Position abzuleiten.

6. Streckblasformeinheit (7) nach Anspruch 5, **dadurch gekennzeichnet, dass** die Mittel zum Erfassen in Form eines optischen Sensors (23) vorliegen.

7. Streckblasformeinheit (7) nach Anspruch 6, **dadurch gekennzeichnet, dass** der optische Sensor (23) ein Lasersensor ist.

8. Streckblasformeinheit (7) nach Anspruch 6 oder 7, **dadurch gekennzeichnet, dass** sie ein Gestell (20) aufweist, dadurch, dass die Streckstange (22) auf einem Schlitten (21) montiert ist, der in Bezug auf das Gestell (20) beweglich ist, und dadurch, dass der Sensor (23) auf dem Gestell (20) befestigt ist und auf den Schlitten (21) zeigt.

## Claims

1. Method for manufacturing, from a blank (**3**) made of plastics material, a container (**2**) having a body (**4**) and a base (**6**) in a stretch-blow moulding unit (**7**), comprising:
- a mould (**11**) provided with a wall (**13**) having the shape of the body (**4**) of the container (**2**) and a mould base (**14**) having the shape of the base (**6**) of the container (**2**), the mould base (**14**) being axially displaceable relative to the wall (**13**) between a low position and a raised position;
- a stretch rod (**22**) which is axially displaceable relative to the mould (**11**) between a high position in which the rod (**22**) is outside the mould and a low position in which the rod (**22**) locally presses the blank (**3**) against the mould base (**14**) in the low position thereof; this method comprising:
- a phase of introducing the blank (**3**) into the mould (**11**);
- a phase of stretch-blow moulding during which a pressurized fluid is injected into the blank (**3**) and the stretch rod (**22**) is displaced from its high position to its low position;
- a phase of boxing during which the mould base (**14**), initially in the low position, is displaced into its raised position and during which the stretch rod (**22**), accompanying the mould base (**14**), is displaced from its low position into a raised position corresponding to the raised position of the mould base (**14**);
this method being **characterized in that** it comprises the determination of the departure of the mould base (**14**) from its low position by detecting the movement of the rod (**22**) from its low position, and the determination of the arrival of the mould base (**14**) into its raised position by detecting the stoppage of the rod (**22**) in its raised position.

2. Method according to Claim 1, **characterized in that** it comprises the determination of the instantaneous position of the mould base (**14**) between its low position and its raised position by detecting the instantaneous position of the rod (**22**) between the low position and the raised position thereof.

3. Method according to Claim 1 or Claim 2, **characterized in that** it comprises an operation of adjusting a command for displacing the mould base (**14**) when the departure of the mould base (**14**) does not correspond to a predetermined theoretical departure.

4. Method according to one of the preceding claims, **characterized in that** it comprises an operation of adjusting the flow rate of a solenoid valve (**19**) connecting an actuator (**17**) bearing the mould base (**14**) to a source (**18**) of pressurized fluid when the actual arrival of the mould base (**14**) does not correspond to a predetermined theoretical arrival.

5. Stretch-blow moulding unit (**7**) for manufacturing, from a blank (**3**) made of plastics material, a container (**2**) having a body (**4**) and a base (**6**), this stretch-blow moulding unit (**7**) comprising:
- a mould (**11**) provided with a wall (**13**) having the shape of the body (**4**) of the container (**2**) and a mould base (**14**) having the shape of the base (**6**) of the container (**2**), the mould base (**14**) being axially displaceable relative to the wall (**13**) between a low position and a raised position;
- a stretch rod (**22**) which is axially displaceable relative to the mould (**11**) between a high position in which the rod (**22**) is outside the mould and a low position in which the rod (**2**) locally presses the blank (**3**) against the mould base (**14**) in the low position thereof;
this stretch-blow moulding unit (**7**) being **characterized in that** it is provided with means (**23**) for detecting at least the movement of the rod (**22**) from its low position and the stoppage of the rod (**22**) at a raised position corresponding to the raised position of the mould base (**14**), and with a central processing unit (**10**) designed to deduce therefrom the departure of the mould base (**14**) from its low position and the arrival of the mould base (**14**) into its raised position.

6. Stretch-blow moulding unit (**7**) according to Claim 5, **characterized in that** the means for detecting are present in the form of an optical sensor (**23**).

7. Stretch-blow moulding unit (**7**) according to Claim 6, **characterized in that** the optical sensor (**23**) is a laser sensor.

8. Stretch-blow moulding unit (**7**) according to Claim 6 or Claim 7, **characterized in that** it comprises a frame (**20**), **in that** the stretch rod (**22**) is mounted on a carriage (**21**) which is mobile relative to the frame (**20**) and **in that** the sensor (**23**) is fixed to the frame (**20**) and points toward the carriage (**21**).
